# EUROPEAN PATENT SPECIFICATION

(11) **EP 2 563 583 B1**
(45) Date of publication and mention of the grant of the patent: **05.11.2014**
(21) Application number: 11718602.3
(22) Date of filing: 26.04.2011
(51) Int. Cl.: B30B 9/30, B65F 1/10, B65F 1/14, B65D 43/26, B64D 11/04, B64D 11/00

(54) **FOOT ACTUATED TRASH DOOR FOR TRASH COMPACTOR**
FUSSBETÄTIGTE MÜLLKLAPPE FÜR EINEN MÜLLVERDICHTER
PORTE POUR DÉCHETS ACTIONNÉE AU PIED POUR UN COMPACTEUR DE DÉCHETS

(30) Priority: 26.04.2010 US 343256 P
(43) Date of publication of application: 06.03.2013
(73) Proprietor: MAG Aerospace Industries, Inc., Carson, CA 92823 (US)
(72) Inventor: AZIZI, Sohiel, Irvine, CA 92614 (US)
(74) Representative: Phillips & Leigh
(86) International application number: PCT/US2011/033869
(87) International publication number: WO 2011/139662

(56) References cited:
- DE-A1- 10 250 886
- JP-U- H0 724 808
- JP-U- 50 033 572
- JP-U- H03 114 745
- US-A- 4 005 648
- US-A- 4 719 852
- US-A1- 2006 283 929

## Description

### FIELD OF THE INVENTION

Embodiments of the present invention relate generally to a foot actuated trash door that creates a chute for a trash compactor.

### BACKGROUND

Collecting and disposing of trash in confined conditions, particularly on-board passenger transport vehicles, such as aircraft, trains, ships, buses, RVs, and other water or air travel vessels can be challenging. However, a good deal of rubbish is generated on such vehicles. For example, after in-flight beverage service, unused items are collected, which often includes drink cups, napkins, newspapers, food wrappers, tea bags, beverage cans, other packaging or non-consumable items and the like, food wastes, or any other type of disposable item that a passenger may consume or bring on-board. Typically, waste items are compacted on-board passenger transport vehicles in order to preserve space.

Trash compactors typically have a main door that allows access to an interior of the trash component. The main door further features a trash opening, such as a trash door or trash window, that creates and provides a path or "chute" into the compactor carton or trash collection chamber. Present stationary trash compactors (such as that depicted in US4005648) use a hand-operated trash door or window that is operated by gripping a handle or grasping an internal lip and applying pressure (e.g., typically a pulling action) to open the trash door. Un-compacted trash material is loaded sideways into the trash box inside the compactor cabinet. Particularly on busy flights or trips, attendants may find themselves needing to quickly dispose of trash when their hands are full. In this instance, opening the trash door in order to dispose of the items requires the attendant to empty his or her hands, open the door, and then pick the trash back up for disposal. It is thus desirable to provide more convenient and more efficient ways to open the compactor trash door.

JP 403114745 U discloses a trash compactor according to the preamble of claim 1 and a method of using it according to the preamble of claim 13.

JP 50033572 presents trash compactor with foot pedals for opening the trash door, but no mechanism for hands-free closure.

### BRIEF SUMMARY

Embodiments of the present invention provide a trash compactor according to claim 1 and a method for activating a trash door of a trash compactor according to claim 13. The foot actuated trash door comprises collapsible side portions, which in a specific embodiment, are accordion-like side louvers. The trash door is generally configured to stay open while a user's foot depresses the foot pedal and to close when the foot pedal is released, allowing a user to access the trash compactor without having to use one's hands to open the trash door.

### BRIEF DESCRIPTION OF THE DRAWINGS

Figure 1 shows a front perspective view of one embodiment of a foot actuated trash door in an open position.
Figure 2 shows a rear perspective view of one embodiment of a foot actuated trash door in an open position.

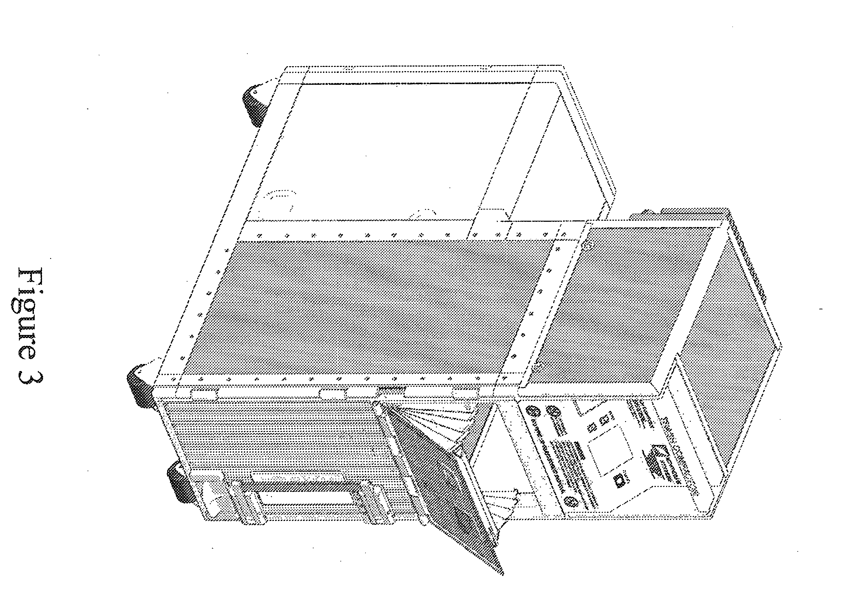

Figure 3 shows a front perspective view of one embodiment of a trash compactor unit having a foot actuated trash door.

### DETAILED DESCRIPTION

Embodiments of the invention generally relate to a foot actuated trash door that allows hands-free opening of the door for disposal of trash into the compactor. It should be understood that a number of possible door configurations and opening mechanisms are possible. The general concept is that a foot pedal actuates the trash door positioned at an upper portion of the trash compactor main door. This allows hands-free loading of the trash compactor, as opposed to having to open the entire main door or having to open the trash door by hand.

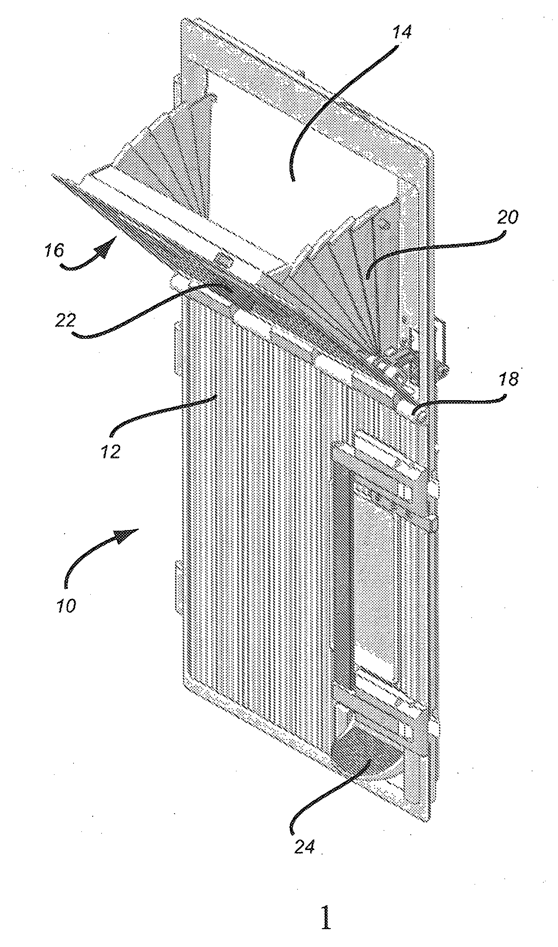

As shown in Figure 1, the trash compactor has a main door 10, which includes a body panel 12 and an opening 14. Opening 14 provides access to an interior portion of the trash compactor for loading trash to be compressed. Providing opening 14 at an upper portion of main door 10 allows for easy top loading of the compactor. A trash door 16 is secured to main door 10 such that it remains closed when not in use, and can easily be activated when necessary. In the embodiment shown, trash door 16 is secured to main door along a bottom edge of trash door 16 via at least one hinge 18. The hinge 18 may extend the entire distance horizontal distance of trash door 16, it may be a single smaller hinge 18, or it may be a series of hinges that secure door 16 in place. (Although proving hinge 18 along the horizontal lower edge of the trash door 16 is shown and is believed to provide the most ease of use, it should be understood that it is possible to provide a hinge along a vertical edge of the trash door 16 so that door 16 swing open from left to right.)

Along sides of trash door 16 are collapsible side portions 20, which help guide trash in to the unit. In the embodiment shown, the side portions are accordion-like folding louvers 20, and when trash door 16 is released open, the louvers 20 create a chute-like path to the compaction area. This chute-like feature is beneficial to catch stray rubbish that may seek to slide out the sides of open trash door 16 without louvers 20 in place. Louvers may be made of any appropriate material, such as plastic, metal, wood, aluminum or any other appropriate material. Alternatively, instead of louvers, it may be possible to provide a flexible fabric along door sides in order to provide collapsible side portions. Louvers or fabric also help maintain the door 16 at the preferred angle and can help prevent it from flapping open further. They can also help prevent strain on the activation system that operates the door by supporting door when in an open position. Moreover, collapsible side portions 20 do not interfere with the action of the platen during the compression cycle because they cause the side to fold upon itself. By contrast, providing non-collapsible or non-flexible sides, such as solid metal or aluminum sides that would slide into the interior of the unit when the door 16 is closed, could potentially interfere with the platen during the compression cycle or the platen could press against or damage non-collapsible sides. At an upper portion of trash door (or anywhere along its edges), there is typically a quarter turn element 22, which provides a secondary restraint for the door in line with current FAA standards and requirements.

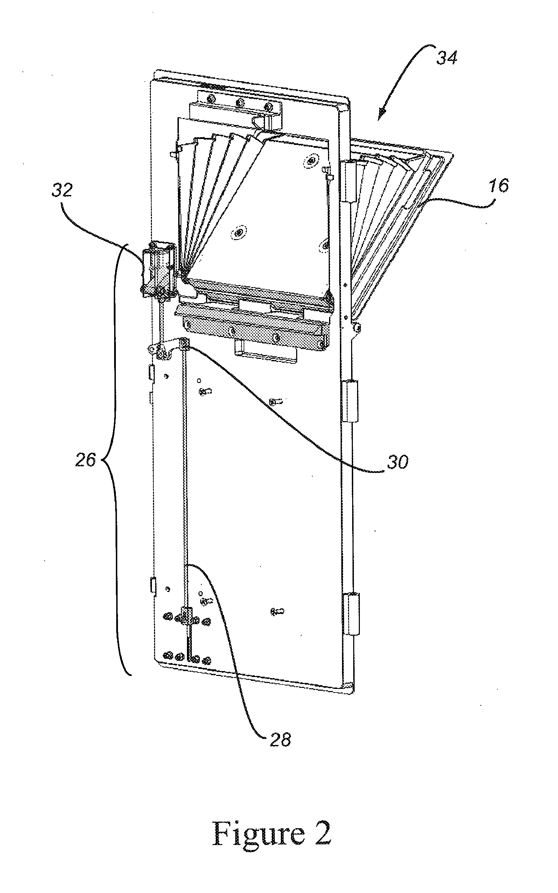

A foot pedal 24 is provided on the lower portion of the main door. Typical action for foot pedal 24 is to be depressed downwardly with the ball of a user's foot, although it is possible for the action to be a lifting up of the pedal with the user's toes. As shown in Figure 2, an activation system 26 is provided that operably connects the foot pedal 24 with the trash door 16 in order to open and close the trash door 16 when the foot pedal 24 is activated. The foot actuated trash door 16 is generally configured to stay open while a user's foot depresses the foot pedal 24 and to close when the foot pedal 24 is released.

In the embodiment shown, activation system 26 may comprise a vertical rod 28, a pivot lever 30, and a door release mechanism 32. In use, the vertical rod 28 is associated with the foot pedal, the pivot lever 30 is associated with the vertical rod 28, and the door release mechanism 32 is associated with the pivot lever 30. Downward pressure on the foot pedal 24 raises the vertical rod 28, which causes the pivot lever 30 to pivot, which causes the door release mechanism 32 to open the trash door 16. Although one mechanical method of operating the door is shown and described, it should be understood that any number of methods and configurations may be used and are considered within the scope of this disclosure.

The foot actuated trash door activation system 26 is generally designed to open the trash door 16 and maintain the door open at approximately about 30 to about 50 degrees with respect to the main door, and more specifically, at about 40 degrees. The open door creates a chute 34 that allows for loading trash from the top of the compactor. One of the primary benefits of this design is that this frees up both of the operator's hands to better handle the trash. When the foot pedal 24 is released, the trash door may close via a spring-loaded closure mechanism that also allows hands-free closure of the door.

Changes and modifications, additions and deletions may be made to the structures and methods recited above and shown in the drawings without departing from the scope of the invention and the following claims.

## Claims

1. A trash compactor for use on-board a passenger transport vehicle, comprising:
(a) a main door (10) for accessing an internal portion of the trash compactor, the main door comprising a trash opening (14);
(b) a foot actuated trash door (16) configured to cover the trash opening and comprising a closure mechanism for hands-free closure of the door;
(c) a foot pedal (24) positioned at or near a lower portion of the main door for opening the trash door;
**characterised in that** the foot actuated trash door opens outwardly and comprises collapsible side portions (20) for guiding trash.

2. The trash compactor of claim 1, wherein the foot actuated trash door (16) is hinged along a horizontal lower edge of the door.

3. The trash compactor of any of the preceding claims, wherein the collapsible side portions (20) are accordion-like lowers and are configured to create a funnel-like chute (34) into the trash compactor.

4. The trash compactor of any of the preceding claims, wherein the foot actuated trash door (16) is configured to stay open while a user's foot depresses the foot pedal (24) and to close when the foot pedal is released.

5. The trash compactor of any of the preceding claims, wherein an activation system (26) is provided to operably connect the foot pedal (24) and the trash door (16).

6. The trash compactor of claim 5, wherein the activation system (26) comprises a vertical rod (28) associated with the foot pedal (24), a pivot lever (30) associated with the vertical rod, and a release mechanism (32) associated with the pivot lever, such that downward pressure on the foot pedal raises the vertical rod, which causes the pivot lever to pivot, which causes the release mechanism to open the trash door (16).

7. The trash compactor of any of the preceding claims, wherein the foot actuated trash door (16) opens at about 30 to about 50 degrees with respect to the main door (10).

8. The trash compactor of claim 7, wherein the foot actuated trash door (16) opens at about 40 degrees with respect to the main door (10).

9. The trash compactor of any of the preceding claims, wherein when the foot actuated trash door (16) is open, it provides a trash chute (34).

10. The trash compactor of any of the preceding claims, wherein the trash compactor is a top load compactor, such that waste is loaded into the opening (14) while the main door (10) remains closed.

11. The trash compactor of any of the preceding claims, suitable for use on-board an aircraft.

12. The trash compactor of claim 1, wherein the closure mechanism comprises a spring-loaded closure mechanism.

13. A method for activating a trash door (16) of a trash compactor, comprising:
(a) accessing a trash compactor, comprising (i) a main door (10) for accessing an internal portion of the trash compactor, the main door comprising, a trash opening (14); (ii) a foot actuated trash door configured to cover the trash opening and comprising a closure mechanism for hands-free closure of the door; and
(iii) a foot pedal (24) positioned at or near a lower portion of the main door for opening the trash door, with an activation system (26) that operably connects the foot pedal and the trash door;
(b) activating the foot pedal and causing the trash door to open outwardly while the main door stays closed;
(c) loading trash into the trash compactor;
(d) releasing the foot pedal to allow the trash door to close, such that the foot actuated trash door is configured to stay open whilst a user's foot depresses the foot pedal and to close when the foot pedal is released;
**characterised in that**
the foot actuated trash door opens outwardly and comprises collapsible side portions (20) for guiding trash.

## Patentansprüche

1. Müllverdichter zur Verwendung an Bord eines Passagiertransportfahrzeugs, Folgendes umfassend:
(a) eine Hauptklappe (10) für den Zugang zu einem inneren Abschnitt des Müllverdichters, wobei die Hauptklappe eine Müllöffnung (14) umfasst:
(b) eine fußbetätigte Müllklappe (16), die dafür gestaltet ist, die Müllöffnung zu bedecken, und die einen Verschlussmechanismus für ein handfreies Verschließen der Klappe umfasst,
(c) ein Pedal (24), das an oder nahe einem unteren Abschnitt der Hauptklappe angeordnet ist, um die Müllklappe zu öffnen,
**dadurch gekennzeichnet, dass** die fußbetätigte Müllklappe zusammenschiebbare Seitenabschnitte (20) zum Führen des Mülls umfasst.

2. Müllverdichter nach Anspruch 1, wobei die fußbetätigte Müllklappe (16) mittels Scharnier entlang einer unteren horizontalen Kante der Klappe angebracht ist.

3. Müllverdichter nach einem der vorhergehenden Ansprüche, wobei die zusammenschiebbaren Seitenabschnitte (20) aus akkordeonähnlichen Lamellen bestehen und dafür gestaltet sind, einen schlotähnlichen Schacht (34) in den Müllverdichter zu erzeugen.

4. Müllverdichter nach einem der vorhergehenden Ansprüche, wobei die fußbetätigte Müllklappe (16) dafür gestaltet ist, während des Herunterdrückens des Pedals (24) durch einen Anwender offen zu bleiben und sich zu schließen, wenn das Pedal freigegeben wird.

5. Müllverdichter nach einem der vorhergehenden Ansprüche, wobei ein Betätigungssystem (26) bereitgestellt ist, um das Pedal (24) und die Müllklappe (16) funktionsfähig zu verbinden.

6. Müllverdichter nach einem der vorhergehenden Ansprüche, wobei das Betätigungssystem (26) eine vertikale Stange (28), die mit dem Pedal (24) verbunden ist, einen Schwenkhebel (30), der mit der vertikalen Stange verbunden ist, und einen Freigabemechanismus (32), der mit dem Schwenkhebel verbunden ist, umfasst, so dass ein abwärts gerichteter Druck auf das Pedal die vertikale Stange hebt, was das Schwenken des Schwenkhebels bewirkt, was wiederum das Öffnen der Müllklappe (16) durch den Freigabemechanismus bewirkt.

7. Müllverdichter nach einem der vorhergehenden Ansprüche, wobei sich die fußbetätigte Müllklappe (16) im Verhältnis zur Hauptklappe (10) um etwa 30 bis etwa 50 Grad öffnet.

8. Müllverdichter nach Anspruch 7, wobei sich die fußbetätigte Müllklappe (16) im Verhältnis zur Hauptklappe (10) um etwa 40 Grad öffnet.

9. Müllverdichter nach einem der vorhergehenden Ansprüche, wobei die fußbetätigte Müllklappe (16) in geöffnetem Zustand einen Müllschacht (34) bereitstellt.

10. Müllverdichter nach einem der vorhergehenden Ansprüche, wobei der Müllverdichter ein Toplader-Verdichter ist, so dass Abfall in die Öffnung (14) gefüllt wird, während die Hauptklappe (10) geschlossen bleibt.

11. Müllverdichter nach einem der vorhergehenden Ansprüche, geeignet zur Verwendung an Bord eines Flugzeugs.

12. Müllverdichter nach Anspruch 1, wobei der Verschlussmechanismus einen federbelasteten Verschlussmechanismus umfasst.

13. Verfahren zum Betätigen einer Müllklappe (16) eines Müllverdichters, Folgendes umfassend:
(a) Zugreifen auf einen Müllverdichter, der Folgendes umfasst: (i) eine Hauptklappe (10) für den Zugang zu einem inneren Abschnitt des Müllverdichters, wobei die Hauptklappe eine Müllöffnung (14) umfasst, (ii) eine fußbetätigte Müllklappe, die dafür gestaltet ist, die Müllöffnung zu bedecken, und die einen Verschlussmechanismus für ein handfreies Verschließen der Klappe umfasst, und (iii) ein Pedal (24), das an oder nahe einem unteren Abschnitt der Hauptklappe angeordnet ist, um die Müllklappe zu öffnen, mit einem Betätigungssystem (26), welches das Pedal und die Müllklappe funktionsfähig verbindet,
(b) Betätigen des Pedals und Bewirken des Öffnens der Müllklappe nach außen, während die Hauptklappe geschlossen bleibt,
(c) Einfüllen von Müll in den Müllverdichter,
(d) Freigeben des Pedals, um das Schließen der Müllklappe zu ermöglichen, so dass die fußbetätigte Müllklappe dafür gestaltet ist, während des Herunterdrückens des Pedals durch einen Anwender offen zu bleiben und sich zu schließen, wenn das Pedal freigegeben wird,
**dadurch gekennzeichnet, dass** die fußbetätigte Müllklappe nach außen öffnet und zusammenschiebbare Seitenabschnitte (20) zum Führen des Mülls umfasst.

## Revendications

1. Compacteur de déchets à utiliser à bord d'un véhicule de transport de personnes, comprenant :
(a) une porte principale (10) pour accéder à une partie interne du compacteur de déchets, la porte principale comprenant une ouverture pour déchets (14) ;
(b) une porte pour déchets actionnée par le pied (16) configurée pour couvrir l'ouverture pour déchets et comprenant un mécanisme de fermeture pour fermer la porte sans les mains ;
(c) une pédale (24) positionnée au niveau ou à proximité d'une partie inférieure de la porte principale pour ouvrir la porte pour déchets ;
**caractérisé en ce que** la porte pour déchets actionnée par le pied comprend des parties latérales pliables (20) pour guider les déchets.

2. Compacteur de déchets selon la revendication 1, dans lequel la porte pour déchets actionnée par le pied (16) est articulée le long d'un bord inférieur horizontal de la porte.

3. Compacteur de déchets selon l'une quelconque des revendications précédentes, dans lequel les parties latérales pliables (20) sont des volets de type accordéon et sont configurées pour créer une goulotte de type entonnoir (34) dans le compacteur de déchets.

4. Compacteur de déchets selon l'une quelconque des revendications précédentes, dans lequel la porte pour déchets actionnée par le pied (16) est configurée pour rester ouverte pendant que le pied d'un utilisateur appuie sur la pédale (24) et pour se fermer lorsque la pédale est libérée.

5. Compacteur de déchets selon l'une quelconque des revendications précédentes, dans lequel un système d'activation (26) est prévu pour raccorder opérationnellement la pédale (24) et la porte pour déchets (16).

6. Compacteur de déchets selon la revendication 5, dans lequel le système d'activation (26) comprend une tige verticale (28) associée à la pédale (24), un levier de pivot (30) associé à la tige verticale, et un mécanisme de libération (32) associé au levier de pivot, de sorte qu'une pression vers le bas sur la pédale lève la tige verticale, ce qui amène le levier de pivot à pivoter, ce qui amène le mécanisme de libération à ouvrir la porte pour déchets (16).

7. Compacteur de déchets selon l'une quelconque des revendications précédentes, dans lequel la porte pour déchets actionnée par le pied (16) s'ouvre à environ 30 à environ 50 degrés par rapport à la porte principale (10).

8. Compacteur de déchets selon la revendication 7, dans lequel la porte pour déchets actionnée par le pied (16) s'ouvre à environ 40 degrés par rapport à la porte principale (10).

9. Compacteur de déchets selon l'une quelconque des revendications précédentes, dans lequel lorsque la porte pour déchets actionnée par le pied (16) est ouverte, elle fournit une goulotte pour déchets (34).

10. Compacteur de déchets selon l'une quelconque des revendications précédentes, dans lequel le compacteur pour déchets est un compacteur à chargement par le haut, de sorte que les ordures sont chargées dans l'ouverture (14) pendant que la porte principale (10) reste fermée.

11. Compacteur de déchets selon l'une quelconque des revendications précédentes, adapté pour une utilisation à bord d'un aéronef.

12. Compacteur de déchets selon la revendication 1, dans lequel le mécanisme de fermeture comprend un mécanisme de fermeture à ressort.

13. Procédé d'activation d'une porte pour déchets (16) d'un compacteur de déchets, comprenant :
(a) l'accès à un compacteur de déchets, comprenant (i) une porte principale (10) pour accéder à une partie interne du compacteur de déchets, la porte principale comprenant une ouverture pour déchets (14) ; (ii) une porte pour déchets actionnée par le pied configurée pour couvrir l'ouverture pour déchets et comprenant un mécanisme de fermeture pour fermer la porte sans les mains ; et (iii) une pédale (24) positionnée au niveau ou à proximité d'une partie inférieure de la porte principale pour ouvrir la porte pour déchets, avec un système d'activation (26) qui raccorde opérationnellement la pédale et la porte pour déchets ;
(b) l'activation de la pédale et le fait d'amener la porte pour déchets à s'ouvrir vers l'extérieur alors que la porte principale reste fermée ;
(c) le chargement des déchets dans le compacteur de déchets ;
(d) la libération de la pédale pour permettre à la porte pour déchets de se fermer, de sorte que la porte pour déchets actionnée par le pied est configurée pour rester ouverte pendant qu'un pied d'utilisateur appuie sur la pédale et pour se fermer lorsque la pédale est libérée ;
**caractérisé en ce que**
la porte pour déchets actionnée par le pied comprend des parties latérales pliables (20) pour guider les déchets.
